(19) Europäisches Patentamt

European Patent Office

Office européen des brevets

(11) EP 1 553 736 A1

(12) EUROPEAN PATENT APPLICATION

(43) Date of publication:
13.07.2005 Bulletin 2005/28

(51) Int Cl.⁷: H04L 12/56

(21) Application number: 04000451.7

(22) Date of filing: 12.01.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: DEUTSCHE THOMSON-BRANDT
GMBH
78048 Villingen-Schwenningen (DE)

(72) Inventors:
• Blawat, Meinolf
30659 Hannover (DE)

• Janssen, Uwe
30926 Seelze (DE)
• Kochale, Axel
31832 Springe (DE)
• Ostermann, Ralf
30167 Hannover (DE)
• Winter, Marco
30173 Hannover (DE)

(74) Representative: Rittner, Karsten, Dr.
Deutsche Thomson-Brandt GmbH,
Karl-Wiechert-Allee 74
30625 Hannover (DE)

(54) **Method and apparatus for generating data packets**

(57)     The performance of transmission and storage methods in the field of data streaming shall be increased. In order to achieve this aim a method and an apparatus for generating data packets are suggested wherein a data packet to be filled having a first end near its start address and a second end near its end address as well as payload data (Data 1 to Data 5) to be filled in the data packet are provided. The data packet is filled with the payload data beginning at the second end of the data packet. As the start position of each payload entity (Data 1 to Data 5) does not depend on the size of the header anymore but only on the size of its predecessors, each payload entity can be stored in the packet buffer immediately without intermediate use of an temporary buffer.

FIG. 4

# EP 1 553 736 A1

**Description**

The present invention relates to a method for generating data packets including the steps of providing a data packet to be filled having a first end near its start address and a second end near its end address, and providing payload data to be filled in said data packet. Furthermore, the present invention relates to a respective apparatus for generating data packets.

Many data transmission or storage protocols, especially in the field of data streaming, require packetizing of the payload data before its transmission to other applications or devices. Often the generated data packets are constant in size and contain a header with information about the enclosed data. In some cases the size of these headers is variable and cannot be determined until all data for the packet has been collected. E.g. there can be an informational part (type of payload, length etc.) for each payload entity within the packet. Therewith the start offset of each payload entity cannot be determined until all payload entities for this packet have been collected or at least identified. This normally leads to an additional copy operation to a temporary buffer and decreases performance.

On systems with access to a DMA controller (direct memory access) the assembling of the packet in a packet buffer can be circumvented, if all packet parts are transmitted separately to the network or storage interface. But in programming languages like Java or on systems without DMA-controller the additional copy operation has usually to be done.

Invention

In view of that it is the object of the present invention to increase the performance of a data transmission or storage system.

According to the present invention this object is solved by a method for generating data packets including the steps of providing a data packet to be filled having a first end near its start address and a second end near its end address and providing payload data to be filled in said data packet, as well as filling said data packet with payload data beginning at said second end of said data packet.

Furthermore, there is provided an apparatus for generating data packets including buffer means for providing a data packet to be filled, said data packet having a first end near its start address and a second end near its end address, data providing means for providing payload data to be filled into said data packet, as well as controlling means for filling said data packet of said buffer means with payload data beginning at said second end of said data packet.

In other words, the idea of this invention is to fill the packet starting at its end, i.e. in reverse order. This does not mean to reverse the order of the data words of the payload but to reverse the order of the payload entities within the packet. Therewith the first payload entity in logical and temporal order is the last in physical order. As the start position of each payload entity does not depend on the size of the header anymore but only on the size of its predecessors, it can be stored in the packet buffer immediately without intermediate use of a temporary buffer.

Preferably, the payload data are supplied as payload entities having different sizes. The size of the payload entities is not known before filling them in the data packet, the filling up of the data packet should be performed according to the following rule. A first payload entity shall be stored in the data packet and a second payload entity shall be stored in front of the first payload entity, so that the highest address of the second payload entity joins the first address of the first payload entity. Further payload entities shall be filled in respectively. Thus, it does not matter if the size of the payload entities is not known in advance.

Header data may be stored at the first end, i.e. at the beginning of the data packet. For this purpose a certain minimum buffer space should be reserved at the beginning of the data packet. Thus, the header is variable in size.

If the data packet has a fixed size, an unused buffer space between header data and a last payload entity each being filled in the data packet may be padded with arbitrary data. The padding of the buffer space shall be performed if the buffer space is not large enough for the next payload entity to be transmitted.

As already indicated, the inventive method for generating data may be used for transmitting or storing data. Similarly, the inventive apparatus for generating data packets may be implemented in a device for transmitting or storing data. As a result of this, a temporary buffer for filling the data packets may be omitted.

Drawings

Exemplary embodiments of the invention are illustrated in the drawings and are explained in more detail in the following description. The drawings showing in:

Figure 1     the filling of data packets according to the prior art; step 1: collection of payload entities;

Figure 2     the filling of data packets according to the prior art; step 2: generation of the header;

Figure 3    the filling of data packets according to the prior art; step 3: copying of payload entities; and

Figure 4    the backward filling of data packets according to the present invention.

Exemplary embodiments

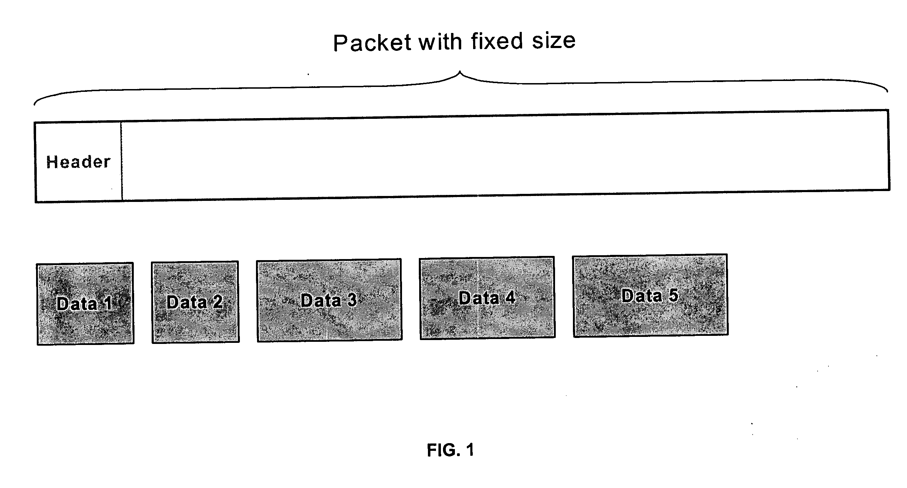

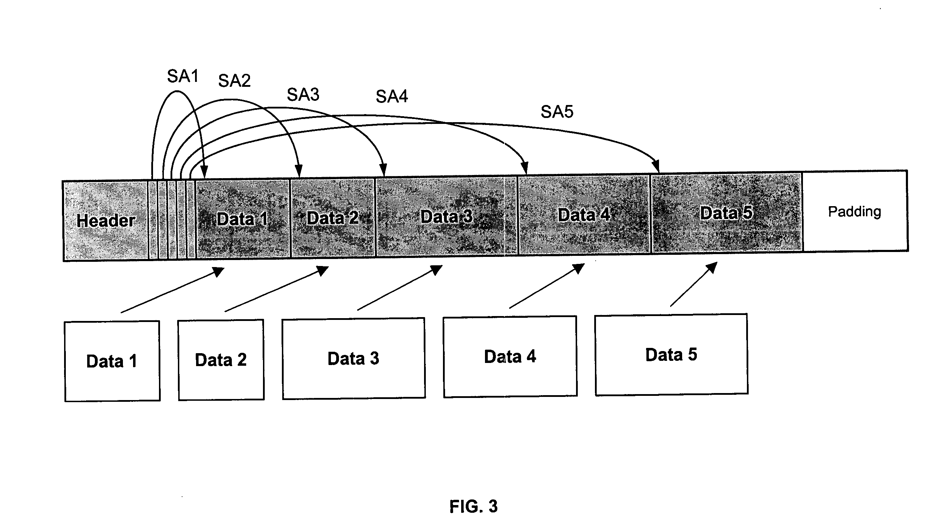

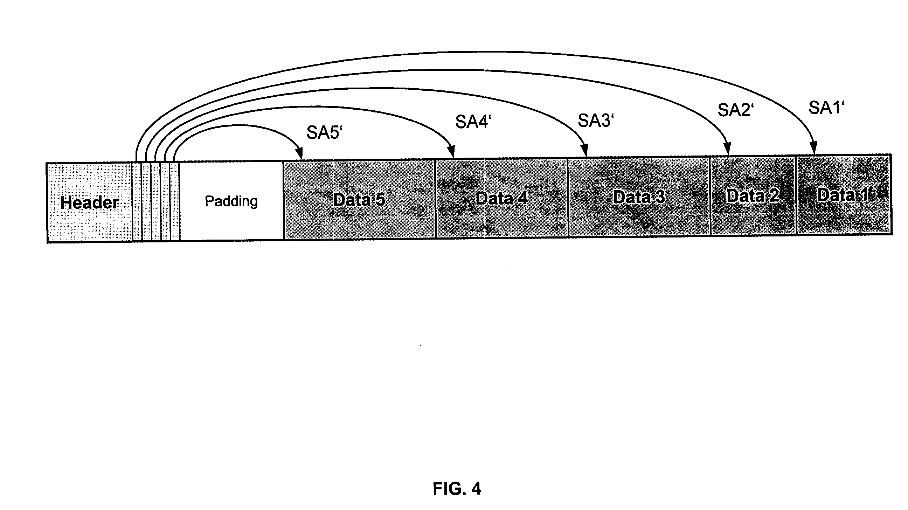

A preferred embodiment of the present invention will be described in connection with Figure 4. However, in order to better understand the present invention, the filling of data packets according to the prior art will be discussed in detail by considering Figures 1 to 3.

A data packet of a given size will be filled with payload entities each having an arbitrary size.

For the further explanation the following data packet format may be used:

| Syntax | Type of Value |
|---|---|
| Packet() | |
| { | |
| ... | (out of scope) |
| NumPayloads | integer |
| for (i = 0...(NumPayloads-1)) | |
| { | |
| PayloadStartOffset[i] | integer |
| PayloadSize[i] | integer |
| ... | (out of scope) |
| } | |
| | |
| Padding | byte array |
| | |
| for (i = 0...(NumPayloads-1)) | |
| { | |
| Payload[i] | byte array |
| } | |
| | |
| Padding | byte array |
| } | |

Table 1: Data Package Syntax

The syntax table 1 only describes the fields of interest. Other fields that normally belong to such packets formats are out of scope. The used semantics might be defined as follows:

- Payload: Any byte sequence as a data or payload entity (further format is out of scope)

- NumPayloads: Indicates the number of payload entities within the packet

- PayloadStartOffset[i]: Indicates the start address of the i-th data payload entity in relative byte number from the first byte of the Packet().

- PayloadSize[i]: Indicates the number of bytes the i-th data or payload entity occupies in the packet.

- Padding: Zero or any positive number of bytes within the packet that are not used

The general method to assemble a packet runs in 3 steps.

In a first step according to Figure 1 payload data or payload entities Data 1 to Data 5 are collected until no more complete payload fits into the packet. Due to the variable size of the packet header the start addresses of the first payload entity Data 1 cannot be calculated immediately, as the number of payloads that the packet will contain is unknown at the moment. Hence the payloads cannot be copied directly to the packet buffer in a designated memory. So at least their size has to be stored in a temporary buffer. If the original data for a payload will not be available until the packet is complete even the complete payloads have to be stored in a temporary buffer.

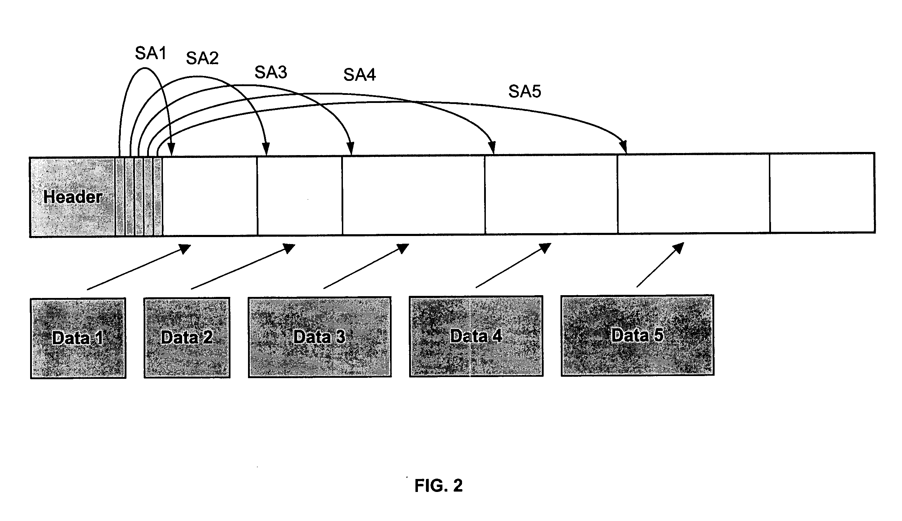

When all payloads Data 1 to Data 5 for the one packet have been collected the size of the packet header and therewith the start addresses SA1 to SA5 of the payloads can be calculated in a second step as shown in Figure 2. A respective header including the start addresses SA1 to SA5 is stored at the beginning of the packet buffer.

Only then - in a third step - each payload Data 1 to Data 5 can be copied to its calculated position within the packet. The main point of this general method is to store the payloads Data 1 to Data 5 right behind the header to best use the packets capacity. Optional padding will be carried out at the end of the packet.

In contrast to the above described method of normal filling of data packets, the invention disclosed here proposes a method that eliminates the necessity of the third step and therewith of additional copy operations. The general idea is to store the first payload entity Data 1 exactly at the end of the packet and the next payload entities Data 2 to Data 5, for instance documents, in front of their predecessors, i.e. in reverse order as depicted in Figure 4.

The advantage of this backward filling of data packets is that the start addresses of all added payloads only depend on the sizes of the previously added payloads and therewith can be calculated immediately when the payloads are delivered to the packaging mechanism. Hence the payloads do not have to be stored in a temporary buffer but can be stored directly in the packet buffer itself.

The header including start addresses SA1' to SA5' is stored at the beginning of the data packet. Optionally, the buffer space between the header and the last payload entity Data 5 can be padded with unused bytes.

The following algorithm can easily determine the offset of the first byte of the i-th payload data i.e. the start address of the i-th payload data:

$$Offset(i) = Offset(i - 1) - PayloadSize(i) \tag{1}$$

where
i = 1 ... n; Offset (0) = PacketSize
Additionally the following expression must be true:

$$Offset(i) > HeaderSize(i) \tag{2}$$

where HeaderSize(i) is the size of the header of a packet with i payload entities.

If expression (2) does not evaluate to true, the i-th payload entity does not fit into the remaining space of the packet and has to be split and stored in two or more packets or it has to be stored completely in the next packet depending on further restrictions out of scope of the invention.

On systems with no Direct Memory Access (DMA) or when a data packet has to be sent from one consecutive area in the memory to the network interface at least one copy operation can be saved due to the inventive backward filling method, which increases the performance.

The invention can be used without modification of a transmission protocol if the protocol does not restrict the packaging according to the following requirements:

- The packet header has to contain values for both start position and length of each payload entity.

- The protocol must not require to store the padding bytes behind the payload, i.e. at the end of the packet, but it has to allow the payload directly behind the header.

- The protocol must not restrict the order of the payload entities according to their order in the packet header.

**Claims**

1. Method for generating data packets including the steps of

   - providing a data packet to be filled having a first end near its start address and a second end near its end address and
   - providing payload data (Data 1 to Data 5) to be filled in said data packet,

   **characterized by**

   - filling said data packet with said payload data (Data 1 to Data 5) beginning at said second end of said data packet.

2. Method according to claim 1, wherein said payload data are supplied as payload entities having different sizes.

3. Method according to claim 2, wherein a first payload entity is stored in said data packet and a second pay load entity is stored in front of said first payload entity, so that the highest address of said second payload entity joins the first address of said first payload entity.

4. Method according to one of the preceding claims, wherein header data are stored at said first end of said data packet.

5. Method according to claim 4, wherein said data packet has a fixed size, and a buffer space between header data and a last payload entity (Data 5) each being filled in said data packet is padded by arbitrary data.

6. Apparatus for generating data packets including

   - buffer means for providing a data packet to be filled, said data packet having a first end near its start address and a second end near its end address,
   - data providing means for providing payload data (Data 1 to Data 5) to be filled into said data packet,

   **characterized by**

   - controlling means for filling said data packet of said buffer means with said payload data (Data 1 to Data 5) beginning at said second end of said data packet.

7. Apparatus according to claim 6, wherein said data providing means are adapted for providing said payload data (Data 1 to Data 5) as payload entities having different sizes.

8. Apparatus according to claim 7, wherein a first payload entity is storable in said data packet and a second payload entity is storable in front of said first payload entity, so that the highest address of said second payload entity joins the first address of said first payload entity.

9. Apparatus according to one of the claims 6 to 8, wherein header data are storable at said first end of said data packet.

10. Apparatus according to claim 9, wherein said data packet has a fixed size, and said controlling means is adapted for padding a buffer space between header data and a last payload entity (Data 5) each being filled in said data packet with arbitrary data.

11. Method for transmitting data making use of the method according to one of the claims 1 to 5.

**12.** Device for transmitting data including an apparatus according to one of the claims 6 to 10.

Packet with fixed size

| Header | |
|---|---|

Data 1  Data 2  Data 3  Data 4  Data 5

**FIG. 1**

EP 1 553 736 A1

FIG. 2

**FIG. 3**

EP 1 553 736 A1

FIG. 4

**European Patent Office**

## EUROPEAN SEARCH REPORT

Application Number

EP 04 00 0451

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 600 746 B1 (PETERSEN LARS-GORAN) 29 July 2003 (2003-07-29) * figures 1-4 * ----- | 1-12 | H04L12/56 |
| A | EP 0 975 189 A (NIPPON ELECTRIC CO) 26 January 2000 (2000-01-26) * figures 10a,10b * ----- | 1-12 | |

TECHNICAL FIELDS SEARCHED (Int.Cl.7)

H04L

The present search report has been drawn up for all claims

| Place of search | Date of completion of the search | Examiner |
|---|---|---|
| The Hague | 2 July 2004 | Gregori, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 00 0451

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2004

| Patent document cited in search report | | Publication date | Patent family member(s) | | Publication date |
|---|---|---|---|---|---|
| US 6600746 | B1 | 29-07-2003 | AU | 4154300 A | 16-10-2000 |
| | | | WO | 0059261 A1 | 05-10-2000 |
| | | | TW | 490948 B | 11-06-2002 |
| EP 0975189 | A | 26-01-2000 | JP | 2000041051 A | 08-02-2000 |
| | | | BR | 9904236 A | 05-09-2000 |
| | | | CN | 1245371 A | 23-02-2000 |
| | | | EP | 0975189 A2 | 26-01-2000 |
| | | | KR | 2000011886 A | 25-02-2000 |
| | | | US | 6639916 B1 | 28-10-2003 |

EPO FORM P0459

For more details about this annex : see Official Journal of the European Patent Office, No. 12/82